# EUROPEAN PATENT SPECIFICATION

(11) **EP 4 381 007 B1**
(45) Date of publication and mention of the grant of the patent: **16.04.2025**
(21) Application number: 22748043.1
(22) Date of filing: 13.07.2022
(51) Int. Cl.: C08J 11/16, B01J 21/08, B01J 35/00, C10G 1/08

(54) **PLASTIC DEPOLYMERIZATION USING SILICA BASED CATALYSTS**
KUNSTSTOFFDEPOLYMERISIERUNG UNTER VERWENDUNG VON SILICIUMDIOXIDBASIERTEN KATALYSATOREN
DÉPOLYMÉRISATION DE PLASTIQUE À L'AIDE DE CATALYSEURS À BASE DE SILICE

(30) Priority: 03.08.2021 EP 21189247
(43) Date of publication of application: 12.06.2024
(73) Proprietor: Basell Poliolefine Italia S.r.l., 20121 Milano (IT)
(72) Inventor: BRITA, Diego, 44122 Ferrara (IT); GUIDOTTI, Simona, 44122 Ferrara (IT); LIGUORI, Dario, 44122 Ferrara (IT); MENICHELLI, Francesco, 44122 Ferrara (IT)
(74) Representative: LyondellBasell
(86) International application number: PCT/EP2022/069545
(87) International publication number: WO 2023/011875

(56) References cited:
- CN-A- 112 642 470
- ES-A1- 2 389 799
- SOCCI JOSEPH ET AL: "The catalytic cracking of sterically challenging plastic feedstocks over high acid density Al-SBA-15 catalysts", APPLIED CATALYSIS A: GENERAL, vol. 570, 24 November 2018 (2018-11-24), pages 218 - 227, XP085556848, ISSN: 0926-860X, DOI: 10.1016/J.APCATA.2018.11.020
- ZEYNEP OBAL ET AL: "The synthesis and characterization of aluminum loaded SBA-type materials as catalyst for polypropylene degradation reaction", CHEMICAL ENGENEERING JOURNAL, ELSEVIER, AMSTERDAM, NL, vol. 176, 13 April 2011 (2011-04-13), pages 202 - 210, XP028115206, ISSN: 1385-8947, [retrieved on 20110519], DOI: 10.1016/J.CEJ.2011.04.063
- MARCILLA ET AL: "Study of the polymer-catalyst contact effectivity and the heating rate influence on the HDPE pyrolysis", JOURNAL OF ANALYTICAL AND APPLIED PYROLYSIS, ELSEVIER BV, NL, vol. 79, no. 1-2, 19 April 2007 (2007-04-19), pages 424 - 432, XP022062390, ISSN: 0165-2370, DOI: 10.1016/J.JAAP.2006.10.017
- RAHIMI SAMIRA ET AL: "Metal-doped high silica ZSM-5 nanocatalyst for efficient conversion of plastic to value-added hydrocarbons", POLYMER DEGRADATION AND STABILITY, BARKING, GB, vol. 191, 19 June 2021 (2021-06-19), XP086768680, ISSN: 0141-3910, [retrieved on 20210619], DOI: 10.1016/J.POLYMDEGRADSTAB.2021.109653
- RAHIMI SAMIRA ET AL: "Supplementary data of Metal-doped high silica ZSM-5 nanocatalyst for efficient catalytic pyrolysis of plastic to value-added hydrocarbons", 19 June 2021 (2021-06-19), pages 1 - 7, XP055882826, Retrieved from the Internet <URL:https://www.sciencedirect.com/science/article/pii/S0141391021001737?via%3Dihub> [retrieved on 20220124]

## Description

### FIELD OF THE DISCLOSURE

This disclosure relates to methods for depolymerizing plastic feedstock, and more particularly to methods for depolymerizing plastic feedstock in the presence of particular type of silica capable to produce a valuable pyrolytic product.

### BACKGROUND OF THE DISCLOSURE

Plastics are inexpensive and durable materials, which can be used to manufacture a variety of products that find use in a wide range of applications, so that the production of plastics has increased dramatically over the last decades. Due to the durability of the polymers involved in plastic production, an increasing amount of plastics are filling up landfill sites and occupying natural habitats worldwide, resulting in environmental problems. Even degradable and biodegradable plastics may persist for decades depending on local environmental factors, like levels of ultraviolet light exposure, temperature, presence of suitable microorganisms and other factors.

Currently plastic recycling primarily includes mechanical recycling and chemical recycling. Globally speaking, mechanical recycling is the most used method for new uses of plastics, and through this method, plastics are mechanically transformed without changing their chemical structure, so they can be used to produce new materials. Typical mechanical recycling steps include collecting plastic wastes; sorting plastic wastes into different types of plastics and colors; packaging plastics by pressing or milling plastics; washing and drying the plastics; reprocessing the plastics into pellets by agglutinating, extruding and cooling the plastics; and finally recycled raw materials are obtained. This is the most widely used technology for the polyolefins like polyethylene (PE) and polypropylene (PP).

Chemical recycling, on the other hand, reprocesses plastics and modify their structure so that they can be used as raw material for different industries or as a basic input or feedstock for manufacturing new plastic products. Chemical recycling typically includes the steps of collecting plastics, followed by heating the plastics to a temperature at which the polymers break down into small fragments. This process, also called depolymerization, is a basic process whereby plastic waste material is converted to liquid fuel by thermal degradation (cracking) in the absence of oxygen. Plastic waste is typically first melted within a stainless steel chamber under an inert purging gas, such as nitrogen. This chamber then heats the molten material to a gaseous state that is drawn and then condensed in one or more condensers to yield a hydrocarbon distillate comprising straight and branched chain aliphatic, cyclic aliphatic and aromatic hydrocarbons. The resulting mixture can then be used as a fuel or used as a feedstock for further thermocatalytic process in order to obtain refined chemicals such as monomers that can be reintroduced into the plastic manufacturing cycle.

The step of converting the molten plastic mass into a gaseous stream can in principle take place only by the action of the heat (thermal depolymerization). However, it has been proved that the presence of a catalyst in this stage allow the depolymerization to take place at a lower temperature and more efficiently.

To this end various catalysts have been proposed often based on silica material. JPH10249214 suggests that silica material can be treated so as to generate a mesoporous silica structure that can be used as depolymerization catalyst. According to CN110283617, after a first purely thermal depolymerization step, the pyrolytic gaseous stream can be subject to thermo-catalytical stage with a Fe doped mesoporous silica in order to produce lighter hydrocarbons.

The article by J. Socci et al., entitled "The catalytic cracking of sterically challenging plastic feedstocks over high acid density Al-SBA-15 catalysts", APPLIED CATALYSIS A: GENERAL, vol. 570, pages 218-227, describes a method for depolymerizing low density polyethylene with high acid density Al-SBA-15 catalysts.

The article by Z. Obal et al., entitled "The synthesis and characterization of aluminum loaded SBA-type materials as catalyst for polypropylene degradation reaction", CHEMICAL ENGENEERING JOURNAL, vol. 176, pages 202-210, describes a method for depolymerizing polypropylene with an aluminum loaded SBA-type material as catalyst.

The article by A. Marcilla et al., entitled "Study of the polymer-catalyst contact effectivity and the heating rate influence on the HDPE pyrolysis", JOURNAL OF ANALYTICAL AND APPLIED PYROLYSIS, vol. 79, pages 424-432, studies the catalytic pyrolysis of HDPE using HZSM-5.

The article by R. Samira et al., entitled "Metal-doped high silica ZSM-5 nanocatalyst for efficient conversion of plastic to value-added hydrocarbons", POLYMER DEGRADATION AND STABILITY, vol. 191, studies the cracking of polyolefins using a silica-based nanocatalyst doped with Mo.

ES 2 389 799 A1 discloses a process for the conversion of plastic waste, preferably polyolefin, into gasoil type fuels using as catalyst Me/Al-SBA-15 and/or Me/Al-MCM-41, being Me a metal selected preferably from the group consisting of Ni, Mo, Co, Pd and Pt.

CN 112 642 470 A discloses a catalytic oil cracking, characterized in that the active component is a metal-doped HZSM-5 molecular sieve, wherein the metal is at least one of tungsten and transition metal elements Mn, Cr, Ti.

Although the results obtained with the above mentioned mesoporous silicas are interesting they are still not satisfying. In fact, in order to be used as a feedstock for a thermocatalytic cracking stage, the pyrolytic product coming from the first depolymerization stage should have a composition such that the amount of aromatic, branched and higher than C₂₈ compounds should as low as possible. At the same time, also the efficiency should be maximized.

We have surprisingly found that if doped with specific metals, mesoporous silicas can give with high efficiency pyrolytic products with improved quality to be used as cracker feedstock.

### SUMMARY OF THE DISCLOSURE

It is therefore an aspect of the present disclosure a process for depolymerizing plastics, comprising the steps of:
a) providing a plastic waste feedstock, which is substantially made of a polyolefin or a mixture of polyolefins;
b) mixing the plastic waste feedstock with a catalyst to obtain a reactant mixture; and
c) heating the reactant mixture to a temperature ranging from 280°C to 600°C to obtain a depolymerization product;
said process being characterized by the fact that the catalyst is selected from a silica based material having a porosity, determined according to the BET method, ranging from 0.2 to 1.0 cm³/g, a surface area ranging from 100 to 500 m²/g and an average pore radius ranging from 0.5 to 50 nm and being doped with a metal or metalloid selected from the group consisting of Ti, Sn, Bi and mixture thereof.

Preferably, the reactant mixture comprises 1-20 wt.% of the catalyst, more preferably 1-10 wt.% and especially from 1 to 5 wt.% of the catalyst with respect to the total reactant mixture.

According to the present invention, the plastic waste feedstock is substantially made of a polyolefin or a mixture of polyolefins. In particular, when a polyolefin mixture is used as plastic feedstock, it comprises a mixture of polyethylene and polypropylene. The polyethylene can be one or more of high density polyethylene (HDPE), low-density polyethylene (LDPE), linear low density polyethylene (LLDPE). Polypropylene (PP) can be either propylene homopolymer or a propylene copolymer with lower amount of ethylene and/or butene. In addition, the feedstock may comprise other polyolefins like polybutene. In a particular embodiment, the feedstock may comprise also polymeric mixtures that incorporates other materials like polystyrene (PS), ethyl-vinyl acetate copolymer (EVA), ethyl-vinyl alcohol copolymer (EVOH), polyvinyl chloride (PVC), or mixtures thereof. In a preferred embodiment, the feedstock is constituted by more than 80% of polypropylene or by a mixture between polyethylene and polypropylene in which polypropylene accounts for more than 50% of the polypropylene/polyethylene mixture.

When carrying out the depolymerization process, care should be taken for not introducing oxygen containing atmosphere into the depolymerization system. The barrier to the potentially oxygen-containing atmosphere can be obtained with a series of expedients such as nitrogen blanketing and vacuum system connected to a barrel of the extruder.

More specifically, the plastic feedstock mixture, can be charged into the feeding system of the depolymerization reactor by means of a hopper, or two or more hoppers in parallel, and the oxygen present in the atmosphere of the plastic waste material is substantially eliminated inside the hopper(s).

Plastic feedstock can be fed directly into the depolymerization reactor for small scale tests. For larger scale it is preferred to fed to the depolymerization reactor by means of an extruder which is turn fed with the plastic feedstock.

Preferably, plastic scrap is brought to a temperature at which substantially all the mass is melted and then injected into the depolymerization reactor. The extruder receives the plastic scrap cut in small pieces into the feed hopper, conveys the stream in the melting section and heat the polymer by combined action of mixing energy and heat supplied by barrel heaters. Usually, the melting temperature ranges from 250 to 350°C.

Additives can optionally be incorporated in the melt aimed at reducing corrosivity of plastic scrap or improving depolymerization efficiency.

During the extrusion, one or more degassing steps can be foreseen to remove residual humidity present in the product.

Before being fed to the reactor, the melt stream can be filtered by in order to remove solid impurities present in the plastic waste.

Any extrusion systems can be applied, as single screw extruders, twin screw extruders, twin screw extruders with gear pump, or combination of the above.

The mixing of the plastic waste feedstock and catalyst can take place either directly into the depolymerization reactor or beforehand outside the reactor. When the mixing takes place in the depolymerization reactor, the catalyst can be fed according to several options. The simplest one, preferably used in small scale systems, is to directly pour the solid catalyst in the reactor under a nitrogen atmosphere. According to another option, the powdery catalyst may be fed to the reactor in a form of a liquid hydrocarbon slurry or a semisolid paste using dedicated devices.

As an alternative, the mixing can take place outside the depolymerization reactor. Also in this case several options are possible. According to one of them, catalyst is mixed with plastic scrap in a homogenizer apparatus and the mixture is then pelletized. The so obtained pellets, which can also contain other additives, may then be charged to the extruder hopper which is used to feed the polymerization reactor. It is also possible to charge into the hopper plastic scrap and catalysts separately. In this case, the mixing can take place into the extruder at the time of plastic scrap melting which is subsequently fed to the depolymerization reactor.

The depolymerization reactor is preferably an agitated vessel operated at temperature ranging from 300 to 550°C, more preferably from 350 to 500°C and especially from 350 to 450°C with inlet for plastic feedstock and catalyst and outlet for the gaseous depolymerization product.

**In** fact, as a result of the depolymerization process, a gaseous stream is generated that is sent to a condensation unit which totally or partially liquifies said stream.

The condensation section receives effluent gases from the depolymerization reactor and partially condense them in an oily product substantially made up of hydrocarbons. A fraction of incondensable gases can be collected and stored separately. The condensation section can be composed by one or more stages, operated in pressure or not, at different temperatures in order to recover the maximum amount of products according to the volatility of the resulting formed compounds. The temperature range can vary of course depending on the operative pressure.

Preferably the condensation section has at least two condensation stages preferably operating at descending temperatures. As an example, in small scale equipment the first condensation stage is operated at a temperature range of 100-120°C and the second at a temperature range of from 2°C to -20°C:
At the end of the process at least 80% wt., and preferably 90% wt., of the plastic feedstock has been converted in liquid or gaseous depolymerization product.

As mentioned above, the main use of the depolymerization product according to the present disclosure would be as a cracker feedstock. In this connection, it would be preferred to generate from the depolymerization process a high yield in liquid depolymerization product. In a preferred embodiment the amount of liquid depolymerization product is higher than 65%wt more preferably from 70 to 90% wt. of the plastic waste feedstock.

Moreover, it would also be preferable for the liquid depolymerization product to have a composition as much as possible suited for a cracker feedstock. This involves having a very low amount, or even absence, of fractions with C28 or higher. Preferably, in the liquid depolymerization product the amount of the higher than C28 fraction is equal to, or lower than, 4%, preferably lower than 3% and more preferably lower than 2% with respect to the total amount of liquid depolymerization product.

Also, the quality of cracker feedstock is higher when the amount of aromatics is lower. Preferably, the amount of the aromatic fraction in the liquid depolymerization product is equal to or lower than 0.10%wt, preferably lower than 0.07%wt and more preferably lower than 0.05%wt.

Another indication of suitability of the liquid depolymerization product as a cracker feedstock is given by the Branch Index which is defined as the molar ratio between internal double bonds with respect to double bond in chain end position (alfa-olefins) determined as described in the characterization section. Preferably, in the liquid depolymerization product the Branch Index is lower than 0.15 more preferably lower than 0.14 and 0.12.

As used herein, "C6-C8 aromatics" refer to a hydrocarbon with sigma bonds and delocalized pi electrons between carbon atoms forming a circle, wherein total of 6 to 8 carbon atoms are present.

In the catalyst according to the present invention, the silica based material is doped with metals or metalloids selected from the group consisting of Ti, Sn and Bi and mixture thereof. In an especially preferred embodiment, the doping metal is selected from Ti, Sn and Bi.

Preferably, the silica based material of the catalyst has a porosity ranging from 0.20 to 0.50 cm³/g, a surface area ranging from 100 to 300 m²/g and an average pore radius preferably ranging from 0.5 to 20 nm, more preferably from 0.5 to 15 nm and especially from 1 to 10 nm.

The silica based material used as depolymerization catalyst according to the present disclosure can be obtained according to several methods. Accordingly to one of the preferred ones, the new mesoporous silica material is synthesized by silicate polycondensation in a citric acid/citrate solution of Pluronic F127 [Chem. Mater. 2015, 27, 5161-5169]. Alternatively, a one-step aqueous process allows to prepare metals doped silica by using induced self-assembly of tetraethoxy silane, the proper metal salt and a triblock copolymer template [Studies in Surface Science and Catalysis, 2006, 162, 369-376].

The catalyst according to the present disclosure allows to obtain high yields of a liquid depolymerization product having a composition that makes it suitable for use as a cracker feedstock.

### CHARACTERIZATION

The properties are determined according to the following methods.

### Porosity and surface area with nitrogen

Measures of porosity were carried out according to the B.E.T. method (apparatus used Sorptomatic 1900 by Carlo Erba). The samples analyzed were preheated at 350°C for 7 h under high vacuum. Data collection and elaboration were made using the Sorptomatic software associated to the instrument.

### Analytical Methods

The GC analysis of the liquid product for each trials was performed using an Agilent 7890 GC (Agilent Technologies, Santa Clara, CA) equipped with a standard non-polar column and a flame ionization detector. According to their retention time the following fractions were collected amounting to the total liquid product: S-RT = x < nC7 , M-RT = nC7 <x< nC11; L-RT = nC12 <x< nC28 , XL-RT = x > C28
The relative amount of the last three fractions is reported in Table 1.

NMR data was used to characterize the percent of aromatic protons, paraffinic protons and olefinic protons in the liquid product. All examples were analyzed with an addition of CDCl₃ (0.6 g of depolymerize polymer/metal oxide mixture with 0.4 g of CDCl₃). The data was collected on a Bruker AV500 MHz NMR spectrometer (Bruker Corporation, Billerica, MA) at 25°C with a 5mm Prodigy probe. One dimension ¹H NMR data was processed using TOPSPIN^{®} software (Bruker) with an exponential line broadening window function. Quantitative measurements were performed with a 15 second relaxation delay, a 30° flip angle pulse, and 32 scans to facilitate accurate integrals. The spectral integrations for aromatic olefinic, and paraffinic protons were obtained and used to quantify relative ratios of these protons.

### EXAMPLES

### General Depolymerization Procedure

30g of Polypropylene commercial grade Moplen HP522H were loaded in a 500ml round glass reactor having three necks equipped with thermocouple and nitrogen inlet. The solid catalyst (0.8 grams) is then introduced in the proper amount into the glass reactor. Two glass condenser are connected in series and kept at 110°C and -8°C respectively using an oil bath (Cryostat Julabo). The reactor is placed in electrically heating system (mantle bath), and setting the desired power, the temperature was raised up to 420-430°C. The pyrolysis process takes place and the following experimental parameters are recorded:
- Tₒₙₛₑₜ , temperature of reaction mixture when condensation of liquid product first observed
- L%, yield of liquid condensable in an ice trap (with respect the polymer charged)
- S%, yield of solid/waxy residue in the reactor, excluding catalyst (with respect to the polymer charged)
- G% yield of gaseous products that are not condensing in the proper section

### Comparative Example 1

A solution of 2.60 g of Pluronic F127 (BioVision, amphiphilic block copolymer) in 107.5 mL of deionized water was prepared at r.t. into a 500 mL round-bottom flask, equipped with a mechanical stirrer. To this solution, 3.68 g of citric acid monohydrate (Sigma-Aldrich, 17.53 mmol) and 2.54 g of sodium citrate dihydrate (MP Biomedicals, 8.64 mmol) were added. The resulting mixture was stirred at r.t. for few h until full dissolution. Subsequently, 10.4 g of sodium silicate solution (Sigma-Aldrich, ~26.5% wt. SiO₂, d = 1.39 g/mL) diluted in 30 mL of deionized water was added at r.t. under stirring to the buffered F127 Pluronic solution. Immediately, a white solid precipitated: stirring was continued for 30 min, then the suspension was kept at rest for 24 h at room temperature. As-synthesized material was filtered on a G4 frit, washed and dried at 50°C under vacuum. Finally, the powder was calcined in air at 350°C for 24 h. Obtained 2.9 g of a free flowing powder showing at the BET characterization, a surface area of 533m²/g, a porosity of 0.327 g/cm³ and an average diameter of 12 nm. The so obtained catalyst was used in the depolymerization test according to the general procedure. The results are reported in Table 1.

### Example 1: Sn doped catalyst

0.75 g of Pluronic F127 (BioVision, amphiphilic block copolymer) and 0.59 g of NaCl (Sigma-Aldrich) were dissolved at r.t. into 70 mL of deionized water. 2.10 g of tetraethyl orthosilicate (TEOS, Thermo Fisher Scientific) was added at 35°C under stirring into the solution and the resulting mixture was kept at this temperature for 4h. A milk colloidal solution was obtained. A freshly prepared 0.2 M solution of SnCl₄*5H₂O (Acros, 10 mL) was then added at 35°C and stirring was kept at this temperature for 24 h. Subsequently, the reaction mixture was transferred to a PP bottle and hydrothermally treated at 90°C under static conditions for 6 h. The solid precipitates were recovered by filtering, washing and drying at 100°C overnight. Finally, the powder was calcined in air at 500°C for 6 h. Obtained 1.6 g of a free flowing powder. The so obtained catalyst was used in the depolymerization test according to the general procedure. The results are reported in Table 1.

### Example 2: Ti doped catalyst

The preparation of this depolymerization catalyst was carried out following the procedure reported in Example 1, but using a 0.2 M solution of TiCl₄ (Sigma-Aldrich, 10 mL) as doped metal source. Obtained 1.2 g of a free flowing powder. The so obtained catalyst was used in the depolymerization test according to the general procedure. The results are reported in Table 1.

### Example 3: Bi doped catalyst

The preparation of this depolymerization catalyst was carried out following the procedure reported in Example 1, but using a 0.2 M solution of BiCl₃ (Sigma-Aldrich) as doped metal source. The reaction was carried out starting from 2.25 g of Pluronic F127: Obtained 3.0 g of a free flowing powder showing at the BET characterization, a surface area of 267m²/g, a porosity of 0.229 g/cm³ and an average diameter of 17 nm. The so obtained catalyst was used in the depolymerization test according to the general procedure. The results are reported in Table 1.

### Comparative Example 2: Fe doped catalyst

The preparation of this depolymerization catalyst was carried out following the procedure reported in Example 1, but using a 0.2 M solution of FeCl₃ (Sigma-Aldrich) as doped metal source. The reaction was carried out starting from 2.25 g of Pluronic F127: Obtained 2.2 g of a free flowing powder showing at the BET characterization, a surface area of 325 m²/g, a porosity of 0.577 g/cm³ and an average diameter of 35 nm. The so obtained catalyst was used in the depolymerization test according to the general procedure. The results are reported in Table 1.

**TABLE 1**

| **Ex.** | **Solid (%wt)** | **Liquid (%wt)** | **Gas (%wt)** | **C12-C22 (%wt)** | **C22-C28 (%wt)** | **>C28 (%wt)** | **Aromatics (%)** | **BI** |
|---|---|---|---|---|---|---|---|---|
| **C1** | 1.0 | 83 | 16 | 46 | 6 | 1.2 | 0.08 | 0.21 |
| **1** | 0.0 | 86 | 14 | 43 | 2 | 0.0 | 0.07 | 0.10 |
| **2** | 9.0 | 72 | 19 | 43 | 0 | 0.0 | 0.04 | 0.09 |
| **3** | 6.0 | 80 | 14 | 44 | 6 | 3.0 | 0.04 | 0.11 |
| **C2** | 4.0 | 81 | 15 | 44 | 3 | 1.0 | 0.12 | 0.17 |

The results shown in Table 1 illustrate the advantage of depolymerizing in the presence of the catalyst of the present disclosure. The inventive examples provide a high amount of liquid fraction combined with high quality expressed by the amount of aromatics and branching index which is lower than that resulting from the comparative catalysts. This ensure a better quality of depolymerization product usable as cracker feedstock.

## Claims

1. A process for depolymerizing plastics, comprising the steps of:
a) providing a plastic waste feedstock;
b) mixing the plastic waste feedstock, which is substantially made of a polyolefin or a mixture of polyolefins, with a catalyst to obtain a reactant mixture; and
c) heating the reactant mixture to a temperature ranging from 280°C to 600°C to obtain a depolymerization product;
said process being **characterized by** the fact that the catalyst is selected from a silica based material having a porosity, measured according to the BET method, ranging from 0.2 to 1.0 cm³/g, a surface area ranging from 100 to 500 m²/g and an average pore radius ranging from 0.5 to 50 nm and being doped with a metal or metalloid selected from the groups selected from the group consisting of Ti, Sn, Bi and mixture thereof.

2. The process according to one or more of the preceding claims in which the silica based material has a porosity ranging from 0.20 to 0.50 cm³/g.

3. The process according to one or more of the preceding claims in which the silica based material has a surface area ranging from 100 to 300 m²/g.

4. The process according to one or more of the preceding claims in which the silica based material has an average pore radius ranging from 0.5 to 20 nm.

5. The process according to claim 4 in which the silica based material has an average pore radius ranging from 0.5 to 15nm.

6. The process according to one or more of the preceding claims in which the reactant mixture comprises 1-20 wt% of the catalyst with respect to the total reactant mixture.

7. The process according to one or more of the preceding claims in which a mixture of polyethylene and polypropylene is used as a plastic feedstock.

8. The process according to one or more of the preceding claims in which at least 90% of the plastic waste feedstock has been converted in liquid or gaseous depolymerization product.

9. The process according to claim 8 in which the amount of liquid depolymerization product is higher than 70% wt. more preferably from 75 to 85% wt. of the initially fed plastic waste feedstock.

10. The process according to one or more of the preceding claims in which the amount of the higher than C28 fraction in the liquid depolymerization product is equal to, or lower than, 4%, with respect to the total amount of liquid depolymerization product.

11. The process according to one or more of the preceding claims in which the amount the aromatic fraction in the liquid depolymerization product is equal to, or lower than, 0.10%, with respect to the total amount of liquid depolymerization product .

12. The process according to one or more of the preceding claims in which the Branch Index of the liquid depolymerization product is lower than 0.15.

## Patentansprüche

1. Verfahren zur Depolymerisierung von Kunststoffen, umfassend die Schritte:
a) Bereitstellen eines Einsatzmaterials aus Kunststoffabfall;
b) Mischen des Einsatzmaterials aus Kunststoffabfall, das im Wesentlichen aus Polyolefin oder einer Mischung von Polyolefinen zusammengesetzt ist, mit einem Katalysator, um eine Reaktantmischung zu erhalten; und
c) Erwärmen der Reaktantmischung auf eine Temperatur im Bereich von 280 °C bis 600 °C, um ein Depolymerisierungsprodukt zu erhalten;
wobei das Verfahren durch die Tatsache gekennzeichnet ist, dass der Katalysator aus Material auf Siliciumdioxidbasis ausgewählt ist, das eine Porosität, gemessen nach dem BET-Verfahren, im Bereich von 0,2 bis 1,0 cm³/g, eine Oberfläche im Bereich von 100 bis 500 m²/g und einen durchschnittlichen Porenradius im Bereich von 0,5 bis 50 nm aufweist und mit einem Metall oder Metalloid ausgewählt aus den Gruppen dotiert ist, die ausgewählt sind aus der Gruppe bestehend aus Ti, Sn, Bi und Mischung davon.

2. Verfahren nach einem oder mehreren der vorhergehenden Ansprüche, wobei das Material auf Siliciumdioxidbasis eine Porosität im Bereich von 0,20 bis 0,50 cm³/g aufweist.

3. Verfahren nach einem oder mehreren der vorhergehenden Ansprüche, wobei das Material auf Siliciumdioxidbasis eine Oberfläche im Bereich von 100 bis 300 m²/g aufweist.

4. Verfahren nach einem oder mehreren der vorhergehenden Ansprüche, wobei das Material auf Siliciumdioxidbasis einen durchschnittlichen Porenradius im Bereich von 0,5 bis 20 nm aufweist.

5. Verfahren nach Anspruch 4, wobei das Material auf Siliciumdioxidbasis einen durchschnittlichen Porenradius im Bereich von 0,5 bis 15 nm aufweist.

6. Verfahren nach einem oder mehreren der vorhergehenden Ansprüche, wobei die Reaktantmischung 1 bis 20 Gew.% des Katalysators umfasst, bezogen auf die gesamte Reaktantmischung.

7. Verfahren nach einem oder mehreren der vorhergehenden Ansprüche, wobei eine Mischung aus Polyethylen und Polypropylen als Kunststoffeinsatzmaterial verwendet wird.

8. Verfahren nach einem oder mehreren der vorhergehenden Ansprüche, wobei mindestens 90 % des Einsatzmaterials aus Kunststoffabfall in flüssiges oder gasförmiges Depolymerisierungsprodukt umgewandelt worden sind.

9. Verfahren nach Anspruch 8, wobei die Menge an flüssigem Depolymerisierungsprodukt höher als 70 Gew.%, bevorzugter 75 Gew.% bis 85 Gew.% des anfangs eingespeisten Einsatzmaterials aus Kunststoffabfall ist.

10. Verfahren nach einem oder mehreren der vorhergehenden Ansprüche, wobei die Menge der Fraktion höher als C28 in dem flüssigen Depolymerisierungsprodukt gleich oder kleiner als 4 % ist, bezogen auf die Gesamtmenge des flüssigen Depolymerisierungsprodukts.

11. Verfahren nach einem oder mehreren der vorhergehenden Ansprüche, wobei die Menge der aromatischen Fraktion in dem flüssigen Depolymerisierungsprodukt gleich oder kleiner als 0,10 % ist, bezogen auf die Gesamtmenge an flüssigem Depolymerisierungsprodukt.

12. Verfahren nach einem oder mehreren der vorhergehenden Ansprüche, wobei der Verzweigungsindex des flüssigen Depolymerisierungsprodukts kleiner als 0,15 ist.

## Revendications

1. Procédé de dépolymérisation de matières plastiques, comprenant les étapes de :
a) fourniture d'une charge d'alimentation de déchets plastiques ;
b) mélange de la charge d'alimentation de déchets plastiques, qui est principalement constituée d'une polyoléfine ou d'un mélange de polyoléfines, avec un catalyseur afin d'obtenir un mélange réactionnel ; et
c) chauffage du mélange réactionnel à une température située dans la plage de 280 °C à 600 °C afin d'obtenir un produit de dépolymérisation ;
ledit procédé étant **caractérisé en ce que** le catalyseur est choisi parmi un matériau à base de silice présentant une porosité, mesurée selon la méthode BET, située dans la plage de 0,2 à 1,0 cm³/g, une aire surfacique située dans la plage de 100 à 500 m²/g et un rayon moyen de pores situé dans la plage de 0,5 à 50 nm et étant dopé par un métal ou un métalloïde choisi parmi les groupes choisi dans le groupe constitué par Ti, Sn, Bi et leur mélange.

2. Procédé selon l'une ou plusieurs des revendications précédentes, dans lequel le matériau à base de silice présente une porosité située dans la plage de 0,20 à 0,50 cm³/g.

3. Procédé selon l'une ou plusieurs des revendications précédentes, dans lequel le matériau à base de silice présente une aire surfacique située dans la plage de 100 à 300 m²/g.

4. Procédé selon l'une ou plusieurs des revendications précédentes, dans lequel le matériau à base de silice présente un rayon moyen de pores situé dans la plage de 0,5 à 20 nm.

5. Procédé selon la revendication 4, dans lequel le matériau à base de silice présente un rayon moyen de pores situé dans la plage de 0,5 à 15 nm.

6. Procédé selon l'une ou plusieurs des revendications précédentes, dans lequel le mélange réactionnel comprend 1 à 20 % en poids du catalyseur par rapport au mélange réactionnel total.

7. Procédé selon l'une ou plusieurs des revendications précédentes, dans lequel un mélange de polyéthylène et de polypropylène est utilisé comme charge d'alimentation de matières plastiques.

8. Procédé selon l'une ou plusieurs des revendications précédentes, dans lequel au moins 90 % de la charge d'alimentation de déchets plastiques ont été convertis en produit de dépolymérisation liquide ou gazeux.

9. Procédé selon la revendication 8, dans lequel la quantité de produit de dépolymérisation liquide est supérieure à 70 % en poids, plus préférablement de 75 à 85 % en poids de la charge d'alimentation de déchets plastiques initialement introduite.

10. Procédé selon l'une ou plusieurs des revendications précédentes, dans lequel la quantité de la fraction supérieure à C28 dans le produit de dépolymérisation liquide est égale ou inférieure à 4 %, par rapport à la quantité totale de produit de dépolymérisation liquide.

11. Procédé selon l'une ou plusieurs des revendications précédentes, dans lequel la quantité de la fraction aromatique dans le produit de dépolymérisation liquide est égale ou inférieure à 0,10 %, par rapport à la quantité totale de produit de dépolymérisation liquide.

12. Procédé selon l'une ou plusieurs des revendications précédentes, dans lequel l'indice de ramification du produit de dépolymérisation liquide est inférieur à 0,15.
